# EUROPÄISCHE PATENTSCHRIFT

(11) **EP 0 813 649 B1**
(45) Veröffentlichungstag und Bekanntmachung des Hinweises auf die Patenterteilung: **11.11.1998**
(21) Anmeldenummer: 96906759.4
(22) Anmeldetag: 08.03.1996
(51) Int. Cl.: F01N 3/20, F01N 3/28

(54) **ELEKTRISCH BEHEIZBARER KATALYSATOR**
ELECTRICALLY HEATED CATALYTIC CONVERTER
CATALYSEUR POUVANT ETRE CHAUFFE ELECTRIQUEMENT

(30) Priorität: 10.03.1995 DE 19508376
(43) Veröffentlichungstag der Anmeldung: 29.12.1997
(73) Patentinhaber: Heraeus Electro-Nite International N.V., 3530 Houthalen (BE)
(72) Erfinder: HOTZ, Uwe, D-76461 Muggensturm (DE); DÜRR, Gerd, D-76571 Gaggenau (DE)
(74) Vertreter: Kühn, Hans-Christian
(86) Internationale Anmeldenummer: EP9601005
(87) Internationale Veröffentlichungsnummer: WO9628645

(56) Entgegenhaltungen:
- DE-A- 4 230 174
- DE-A- 4 243 904
- DE-A- 4 302 068

## Beschreibung

Die Erfindung betrifft einen elektrisch beheizbaren Katalysator mit den Merkmalen des Oberbegriffs des Anspruchs 1.

Ein gattungsgemäßer Katalysator ist aus der DE 42 43 904 A1 bekannt. Der bekannte Katalysator weist ein äußeres, geschlossenes Gehäuse auf, in dem ein sogenannter Monolith eingebettet ist. Der Monolith des Katalysators, im Zusammenhang dieser Patentanmeldung auch Träger genannt, ist im wesentlichen eine Schichtanordnung aus glatten, ebenen Metallfolien oder -blechen und gewellten Metallfolien oder -blechen. Die gewellten Metallfolien erstrecken sich quer zum Abgasstrom, wobei die Wellen parallel zum Abgasstrom angeordnet sind und jeweils Kanäle für das durchströmende Abgas bilden. Der Träger des Katalysators ist mit einem Washcoat beschichtet, in den Platinmetalle eingelagert oder aufgebracht sind. Jede dritte bzw. jede vierte der flachliegenden Metallfolien steht in Querrichtung der Abgasströmung seitlich über den mit Kanälen durchsetzten Bereich des Monolithen hinaus und weist in diesem Bereich zu jeder Seite des Monolithen eine ringförmige, in Dickschichttechnik aufgedruckte Kontaktfläche auf. Zwischen den beiden Kontaktflächen eines glatten Bleches verläuft eine gegenüber dem Trägerblech elektrisch isolierte, in Dickschichttechnik aufgedruckte Widerstandsheizschicht. Die elektrische Kontaktierung der mit Heizelementen versehenen Metallfolien erfolgt über elektrisch leitende Ringe, die zwischen je zwei sich gegenüber liegenden Anschlußbereichen der Metallfolien angeordnet sind. Die Ringe sind jeweils zwischen den überstehenden Enden der Metallfolien zu einem Stapel von der Höhe des Monolithen angeordnet und mit einem durchgehenden Schraubelement zusammengepreßt, so daß die Druckkraft für eine dauerhafte Kontaktierung der Ringe mit den Anschlußbereichen sorgt. Die Ringe wiederum sind durch hochtemperaturfest gelötete Anschlußdrähte mit einer elektrischen Spannungsversorgung verbunden.

Der bekannte elektrisch beheizbare Katalysator ist in der Herstellung relativ aufwendig.

Es gibt noch weitere technische Lösungen für elektrisch beheizbare Katalysatoren, bei denen entweder die metallische Trägerfolie des Monolithen direkt vom Strom durchflossen und so erhitzt wird oder bei denen ein separates elektrisches Heizelement die Trägerstruktur des Katalysators indirekt erhitzt. Beispiele für die sonstigen technischen Lösungen finden sich in der DE-PS 563 757 oder in der WO89/10470. Diese technischen Lösungen liegen von dem Erfindungsgegenstand weiter entfernt als die obengenannte DE 42 43 904 A1.

Es ist Aufgabe der Erfindung, einen gattungsgemäßen elektrisch beheizbaren Katalysator so fortzubilden, daß eine einfachere Fertigung möglich ist.

Diese Aufgabe wird von einem elektrisch beheizbaren Katalysator mit den Merkmalen des Anspruchs 1 gelöst.

Weil die Anschlußelemente für die elektrische Kontaktierung der Widerstandsheizschicht mit der Widerstandsheizschicht, vorzugsweise in den Anschlußbereichen, stoffschlüssig und elektrisch leitend verbunden sind, ist die bekannte Anordnung von elektrisch leitenden Zwischenringen, die durch Pressung mit den Anschlußbereichen in elektrischen Kontakt gebracht werden, nicht mehr erforderlich. Die gesamte Konstruktion kann dadurch mechanisch einfacher, insbesondere automatisch herstellbar werden. Außerdem ergibt sich gegenüber den bekannten Katalysatoren eine Gewichtsreduzierung, die bei Kraftfahrzeugen generell angestrebt ist, aber auch zu einem schnelleren Erreichen der Betriebstemperatur führt.

Es ist insbesondere vorteilhaft, wenn die Anschlußelemente mit den Anschlußbereichen verschweißt sind. Hierbei sind thermische Schweißverfahren wie Widerstandspreßschweißen oder Laserschweißen, aber auch ein Ultraschallschweißverfahren vorteilhaft.

Die Dauerhaltbarkeit des elektrisch beheizbaren Katalysators wird positiv beeinflußt, wenn in den Anschlußbereichen auf die Widerstandsheizschicht eine zusätzliche Kontaktschicht aufgebracht wird, weil dann die mit dem Anschlußelement zu verschweißende Materialdicke besser den Erfordernissen angepaßt werden kann.

Ein mechanisch einfacher Ausgleich der durch thermische Ausdehnung entstehenden Kräfte ist möglich, wenn die Anschlußelemente wenigstens in Querrichtung zur Abgasströmung federelastisch ausgebildet sind.

Für eine rationelle Fertigung ist es außerdem vorteilhaft, wenn jedem Anschlußbereich genau ein Anschlußelement zugeordnet ist. Darüber hinaus ist vorteilhaft, wenn alle an einer Seite des Monolithen angeordneten Anschlußelemente mit einem gemeinsamen elektrisch leitenden Verbindungselement verbunden, insbesondere verschweißt sind. Dieses Verbindungselement dient dann zur gemeinsamen elektrischen Kontaktierung, insbesondere zur elektrischen Parallelschaltung der Widerstandsheizschichten.

Im folgenden werden zwei Ausführungsbeispiele des erfindungsgemäßen Katalysators anhand der Zeichnungen beschrieben. Es zeigen:
- Figur 1:: den Träger eines erfindungsgemäßen Katalysators in einer Darstellung in Richtung des vom Abgas durchströmbaren Querschnitts;
- Figur 2:: eine einzelne, mit Anschlußelementen versehene Metallfolie in einer Draufsicht;
- Figur 3:: die Metallfolie gemäß Figur 2 in der Ansicht gemäß Figur 1;
- Figur 4:: ein Verbindungselement zur elektrischen Parallelschaltung der Widerstandsheizschichten;
- Figur 5:: ein weiteres Ausführungsbeispiel eines erfindungsgemäßen Katalysators in einer Darstellung gemäß Figur 1;
- Figur 6:: eine einzelne, mit Anschlußelementen versehene Metallfolie in einer Draufsicht;
- Figur 7:: einen Block aus mehreren gewellten und glatten Folien mit daran angeordneten Anschlußelementen; sowie
- Figur 8:: ein U-förmiges Verbindungselement zur elektrischen Parallelschaltung der Widerstandsheizschichten in drei Ansichten.

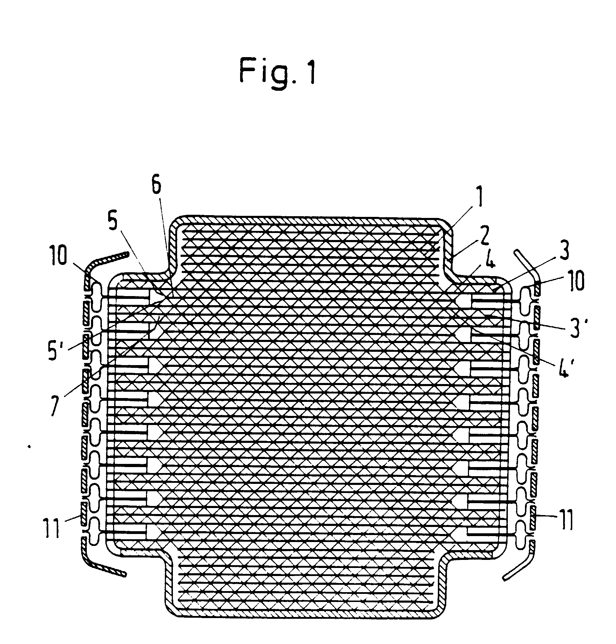

In der Figur 1 ist der Träger eines erfindungsgemäßen Katalysators in einer Darstellung in Richtung der Strömungsrichtung des Abgases, also in Richtung der durch seinen Monolithen verlaufenden Kanäle dargestellt.

Der Träger 1 enthält ein Paket aus geschichteten Metallfolien, die abwechselnd entweder eben bzw. plan oder gewellt sind. Die gewellten Folien sind so angeordnet, daß eine dazwischen liegende, glatte Folie jeweils an der gleichen Stelle oben und unten von einer gewellten Folie berührt wird. In diesem Bereich können die Folien zur Erzeugung einer steifen Struktur miteinander verschweißt werden.

In der Figur 1, von oben nach unten gesehen, folgen zunächst glatte und gewellte Folien aufeinander, die elektrisch nicht beheizbar sind.

Der Träger 1 weist außerdem einen Rahmen 2 auf, der die glatten und gewellten Bleche außen umgibt. Es wird angestrebt, Katalysatoren in im Querschnitt runde Gehäuse einzusetzen, da bei solchen Gehäusen günstigere Strömungsverhältnisse erreichbar sind als bei anderen Querschnitten. Zur Anpassung an einen in Strömungsrichtung des Abgases mehr oder weniger runden Querschnitt ist der Rahmen 2 in der Darstellung gemäß Figur 1 oben und unten schmaler gehalten, so daß hier kürzere Metallfolien zum Einsatz kommen. Diese Bereiche sind die nicht elektrisch beheizbaren Bereiche. In dem Bereich zwischen den schmaleren Bereichen haben die Metallfolien eine größere Breite, wobei die Metallfolien zu Paketen zusammengefaßt sind. Jedes Paket umfaßt zunächst eine gewellte Metallfolie 3 mit voller Breite quer zur Abgasrichtung, darauf folgt eine glatte Metallfolie 4, dann eine kürzere gewellte Metallfolie 5, eine ebenso kurze glatte Metallfolie 6, eine weitere kurze gewellte Metallfolie 5', dann eine lange glatte Metallfolie 4', eine lange gewellte Metallfolie 3' und schließlich zum Abschluß eine lange glatte Metallfolie 7.

Das so gebildete Paket wird in sich verbunden. Der Katalysator gemäß dem beschriebenen Ausführungsbeispiel enthält 8 solcher Pakete.

Die langen, glatten Metallfolien 4 und 4' tragen je zwei elektrische Widerstandsheizschichten. Die Widerstandsheizschichten jeder Metallfolie sind an jedem Ende der Metallfolie mit je einem gemeinsamen Anschlußelement 10 versehen. Der in Figur 1 dargestellte Katalysator weist insgesamt 32 Anschlußelemente auf, 16 an jeder Seite. Die Anschlußelemente 10 jeder Seite sind über ein gemeinsames, kammartiges Verbindungsstück 11 miteinander verbunden.

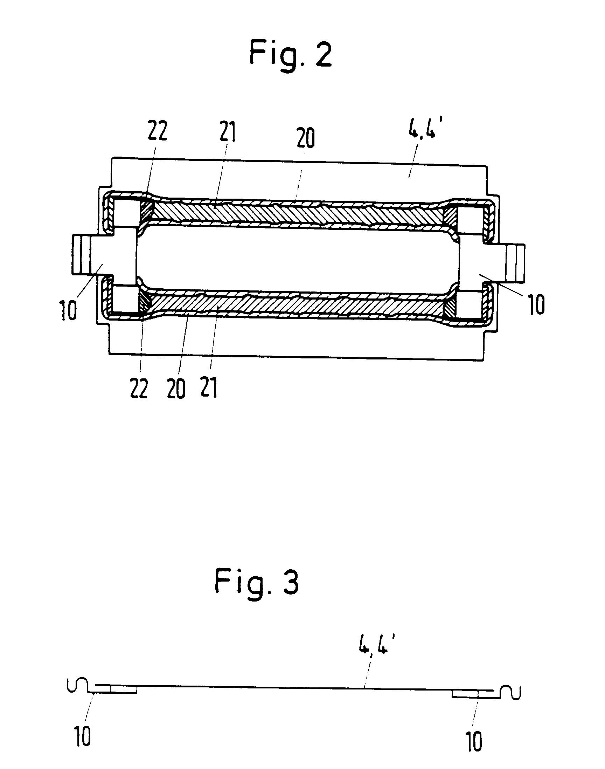

In der Figur 2 ist eine lange, glatte Metallfolie 4 bzw. 4' in einer Draufsicht auf die Widerstandsheizschichten dargestellt. die glatte Metallfolie 4, 4' ist aus einem hochlegierten, hitzebeständigen Stahl mit hohem Chrom- und Aluminiumgehalt gefertigt. Auf die Metallfolie sind je zwei Isolationsschichten 20 in Siebdrucktechnik aufgedruckt und gesintert. Nach dem Sintern beträgt die Schichtdicke der Isolationsschichten 20 etwa 20 bis 30 um. Die Isolationsschichten 20 tragen wiederum je eine Widerstandsheizschicht 21, die ebenfalls in Siebdrucktechnik aus einer elektrisch leitfähigen Paste erzeugt und dann gesintert ist.

In den jeweiligen Endbereichen, also den Anschlußbereichen der elektrischen Widerstandsheizschichten 21 sind zusätzliche Kontaktschichten 22 aufgebracht, je Widerstandsheizschicht zwei, d. h. bei dem dargestellten Ausführungsbeispiel je Folie vier. Auch diese zusätzlichen Kontaktschichten 22 sind elektrisch leitend und mittels Dickschichttechnik durch Siebdruck vorzugsweise aus dem gleichen oder einem metallografisch ähnlichen Material wie die Widerstandsheizschichten 21 hergestellt.

In der Darstellung gemäß Figur 2 sind die beiden Widerstandsheizschichten 21 über ihre Kontaktschichten 22 mit einem Anschlußelement 10 an jeder Seite der Folie verbunden. Dabei liegt das Anschlußelement 10 auf den zugehörigen Kontaktschichten 22 auf und ist durch Laserschweißen stoffschlüssig mit der Kontaktschicht 22 und damit mit der Widerstandsheizschicht verbunden. In dem Bereich zwischen den beiden angeschweißten Abschnitten erhebt sich das Anschlußelement 10 brückenartig über die Metallfolie, so daß kein elektrischer Kontakt zu der Metallfolie selbst hergestellt wird. Von den Kontaktschichten 22 wegweisend enthält jedes Anschlußelement 10 einen gewellten Bereich, der nach außen über die Metallfolie 4, 4' übersteht. Der überstehende Bereich hat im Querschnitt in der Betrachtungsrichtung der Fig. 1 die Gestalt eines liegenden S.

In der Figur 3 ist die Folie 4, 4' gemäß Figur 2 in einer Ansicht entsprechend Figur 1 dargestellt. Erkennbar ist, daß sich das Anschlußelement 10 im Bereich zwischen den Kontaktschichten 22 von der Metallfolie 4, 4' abhebt und beiderseits der Metallfolie die Anschlußelemente 10 in wellenförmige Endabschnitte auslaufen, die S-förmigen Querschnitt aufweisen.

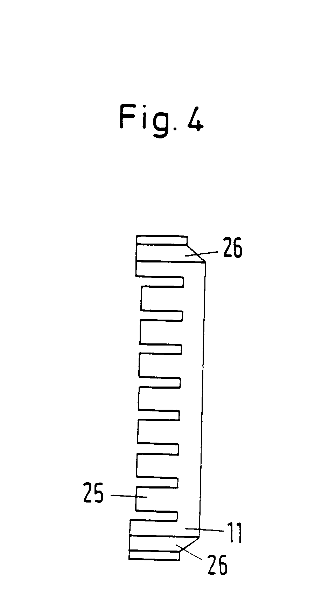

In der Figur 4 ist das Verbindungselement 11 näher dargestellt. Das Verbindungselement 11 weist laschenförmige Abschnitte 25 auf, die kammartig entlang der Längserstreckung des Verbindungselements 11 angeordnet sind. In den Endbereichen 26 ist das Verbindungselement 11 gekröpft.

Die Montage eines erfindungsgemäßen Katalysators erfolgt im wesentlichen folgendermaßen:

Die elektrisch beheizbaren, ebenen Bleche 4 bzw. 4' werden mit den aufgedruckten Schichten 20, 21 und 22 versehen. Diese Schichten werden jeweils aufgesintert.

Danach werden die Anschlußelemente 10 auf die Kontaktschichten 22 aufgesetzt und durch Laserschweißung mit diesen Schichten verbunden. Damit stehen sie elektrisch und stoffschlüssig mit den Widerstandsheizschichten 21 in Verbindung. Dabei ist wichtig, daß die Widerstandsheizschichten 21 nicht mit den Trägerblechen 4 oder 4' in elektrischen Kontakt kommen.

Nun werden abwechselnd glatte und gewellte Bleche 3 bis 7 in der oben im Zusammenhang mit Figur 1 beschriebenen Reihenfolge zu Paketen miteinander verschweißt. Die kurzen gewellten Bleche 5 und 5' sind in Strömungsrichtung des Abgases in je drei Streifen unterteilt, derart, daß zwischen den Streifen zwei Bereiche frei bleiben. Diese Streifen liegen neben bzw. zwischen den Widerstandsheizschichten 21, während die freien Bereiche diese Widerstandsheizschichten 21 freilassen. Die zwischen den Blechen 5 und 5' liegenden kurzen glatten Metallfolien 6 weisen im Bereich der Widerstandsheizschichten 21 Ausschnitten auf.

Die Widerstandsheizschichten der Bleche 4 und 4' sind einander zugewandt, so daß die Anschlußelemente 10 im wesentlichen aneinander anliegen. Die S-förmig gebogenen Endbereiche der Anschlußelemente 10 von zwei zu einem Paket gehörigen Blechen 4 und 4' verlaufen also von der Kontaktstelle her gesehen zuerst voneinander weg, dann wieder aufeinander zu, wobei sie zwischen sich einen Zwischenraum bilden, berühren sich im Bereich eines Bogens nahezu und laufen dann mit ihren freien Enden wieder voneinander weg.

Auf diese Weise werden acht weitgehend identische Pakete gefertigt, die zu dem Monolithen übereinander zusammengefügt werden. Die Endbereiche der Anschlußelemente 10 von 2 aneinander anliegenden Paketen laufen nunmehr mit ihren freien Enden aufeinander zu. In diesem Bereich bilden die Anschlußelemente 10 einen etwa ovalen Zwischenraum, in den je eine Lasche 25 des Verbindungsstücks 11 eingeführt werden kann. Jedes Anschlußelement 10 wird dann an seinem freien Ende mittels Laserschweißen mit dem Verbindungsstück 11 verbunden. Hierdurch ergibt sich eine außerordentlich hohe mechanische Stabilität sowie eine qute elektrische Kontaktierung der verschiedenen Widerstandsheizschichten mit dem Verbindungselement 11.

Eine derartige Verbindung ist an beiden Seiten des Monolithen vorgesehen, so daß sämtliche Widerstandsheizschichten des Katalysators zueinander elektrisch parallel geschaltet sind. Der Monolith gemäß Figur 1 kann nun mit einem Washcoat überzogen und mit den Platinmetallen versehen werden. Danach kann der Monolith in ein im wesentlichen herkömmliches Katalysatorgehäuse eingebaut werden, wobei die elektrische Kontaktierung der Widerstandsheizelemente mit der elektrischen Stromversorgung des Kraftfahrzeugs über die Verbindungsstücke 11 in im wesentlichen bekannter Weise erfolgen kann. Die insoweit erwähnten Fertigungsschritte sind automatisierbar und von der Zuverlässigkeit des Endprodukts her den bekannten Lösungen überlegen.

Bei seiner Verwendung als elektrisch beheizbarer Katalysator für die Kaltlaufphase eines Kraftfahrzeugmotors wird der erfindungsgemäße Katalysator folgendermaßen betrieben:

Mit dem Einschalten der Zündung, oder je nach Auslegung mit dem Start des Verbrennungsmotors, wird der Katalysator über nicht dargestellte Anschlußleitungen an den beiden Verbindungsstücken 11 mit der Bordspannung des Kraftfahrzeugs beaufschlagt. Da die Widerstandsheizschichten 21 gegenüber den Blechen 4, 4' elektrisch isoliert sind, fließt der Strom durch die Widerstandsheizschichten 21. Der Widerstand kann hierbei so eingestellt werden, daß gerade die erforderliche elektrische Leistung verbraucht wird, wogegen ein Stromfluß durch die Metallfolien 4, 4' selbst zu wesentlich höheren elektrischen Leistungen infolgen geringeren Widerstands führen würde.

Die Widerstandsheizschichten 21 heizen also zunächst selbst auf und erhitzen den unmittelbar auf ihnen angeordneten Washcoat, der das eigentliche katalytisch aktive Material enthält. Der Washcoat wird also von den Widerstandsheizschichten selbst erhitzt. In den ersten Sekunden nach Inbetriebnahme stehen so bereits katalytisch aktive Bereiche zur Verfügung, so daß der Schadstoffausstoß eines Kraftfahrzeugs drastisch gemindert werden kann. Weil der Washcoat porös ist, kann auch die Widerstandsheizschicht 21 selbst eine katalytische Reaktion auslösen, wenn sie Platin oder Platinmetalle enthält.

Ab der Starttemperatur der katalytischen Reaktion wird der Metallkatalysator durch die Wärme der katalytischen Reaktion selbst weiter erhitzt, so daß die Stromzufuhr abgeschaltet werden kann.

Mit einem solchen System ist der Schadstoffausstoß eines Kraftfahrzeugs in der Kaltlaufphase erheblich reduzierbar.

Die erfindungsgemäße stoffschlüssige Verbindung der Anschlußelemente mit der Widerstandsheizschicht in den Anschlußbereichen ermöglicht die rationelle und zuverlässige Fertigung des insoweit beschriebenen Abgaskatalysators.

Zu der Dauerhaltbarkeit des Katalysatormonolithen trägt auch die endseitig S-förmige Ausgestaltung der Anschlußelemente 10 bei, die federelastische Elemente zur Aufnahme von thermischen Ausdehnungen darstellen. Die einzelnen oben erwähnten Pakete können sich dabei individuell thermisch ausdehnen, weil sie in der Querrichtung der Fig. 1 nur an den freien Enden der Anschlußelemente 10 fixiert sind.

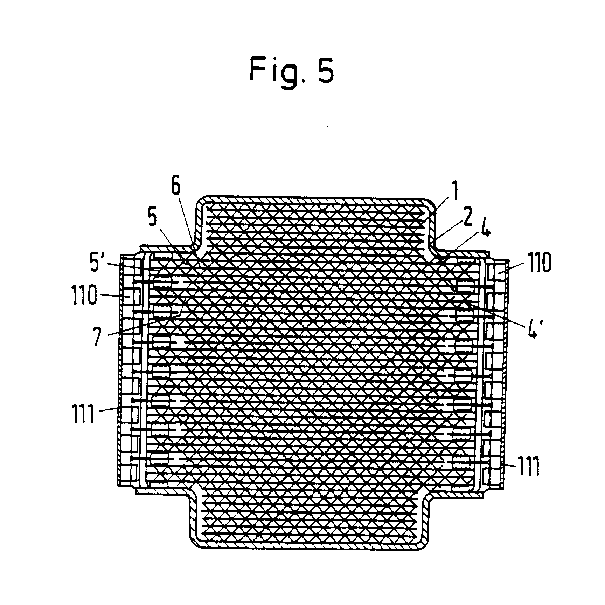

In der Fig. 5 ist ein Träger eines anderen Ausführungsbeispiels eines erfindungsgemäßen Katalysators in der Ansicht gemäß Fig. 1 dargestellt. Hierbei sind gleiche Bauelemente mit gleichen Bezugsziffern versehen.

Die Kontaktierung der Widerstandsheizschichten 21, die auf die Folien 4 und 4' aufgebracht sind, erfolgt bei diesem Ausführungsbeispiel über Anschlußelemente 110, die U-förmig gebogen sind und jeweils 2 benachbarte, elektrisch beheizbare Folien 4 bzw. 4' gemeinsam kontaktieren. Wie bei dem zuvor beschriebenen Ausführungsbeispiel sind an beiden Seiten der Widerstandsheizschichten 21 Anschlußelemente 110 vorgesehen, so daß ein elektrischer Strom durch die Widerstandsheizschichten 21 geleitet werden kann. Die auf einer Seite des Katalysatormonolithen, also beispielsweise in der Fig. 5 auf der rechten Seite vorgesehenen Anschlußelemente 110 werden über ein Verbindungsstück 111 elektrisch und mechanisch verbunden. Das Verbindungsstück 111 weist in diesem Ausführungsbeispiel die Gestalt einer Schiene mit U-förmigem Querschnitt auf.

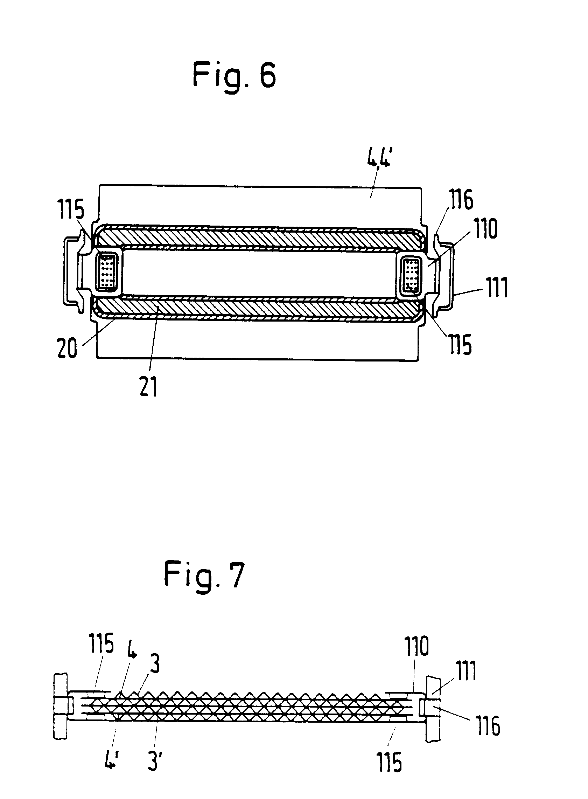

In der Figur 6 ist eine Metallfolie 4 bzw. 4' dargestellt, deren Widerstandsheizschicht 21 beidseitig mit den Anschlußelementen 110 versehen ist. Die Anordnung gemäß Fig. 6 ist in der Fig. 7 in einer Ansicht gemäß Fig. 1 bzw. Fig. 5 dargestellt. Die Anschlußelemente 110 weisen eine U-förmige oder klammerförmige Gestalt auf und umgreifen die Folien 4 bzw. 4' von außen. Jedes Anschlußelement 110 trägt zwei topfförmig ausgeformte Bereiche 115, die aufeinander zuweisen und die an der Widerstandsheizsschicht 21 anliegen. In diesen topfförmig abgesenkten Bereichen 115 ist das jeweilige Anschlußelement 110 beispielsweise durch Laserschweißen mit der Widerstandsheizschicht 21 elektrisch und mechanisch verbunden. Der topfförmige Bereich 115 ist jeweils so tief abgesenkt, wie es der Höhe der gewellten Folien 3 bzw. 3' entspricht, so daß die der Widerstandsheizschicht abgewandte Seite der Anschlußelemente 110 in einer Ebene mit der Oberseite der gewellten Folien 3 bzw. 3' liegt. Die Anschlußelemente 110 sind zusammengesetzt aus einer U-förmigen, mit topfförmigen Bereichen 115 versehenen Klammer, die die Folien 4 bzw. 4' gemäß Fig. 7 umgreift, und einer Verbindungsklammer 116, die aus einem Metallstreifen geformt ist. Die Verbindungsklammer 116 ist in der Fig. 6 in einer Draufsicht erkennbar, so daß nur die Stirnseite des Metallstreifens sichtbar ist. Zwischen der Verbindungsklammer 116 und dem Verbindungsstück 111 ist in der Fig. 6 ein freier Querschnitt zu sehen. Das Anschlußelement 110 ist in dem zu den topfförmigen Bereichen 115 rechtwinklich abgewinkelten Mittelabschnitt, der zwischen den topfförmigen Bereichen liegt, mit der Verbindungsklammer 116 verschweißt. Die Verbindungsklammer 116 und das Anschlußelement 110 liegen dort im wesentlichen planparallel aneinander an.

Die Verbindungsklammer 116 wiederum umgreift das Verbindungsstück 111 an den beiden freien Enden seines U-förmigen Querschnitts und ist dort mit dem Verbindungsstück 111 verschweißt.

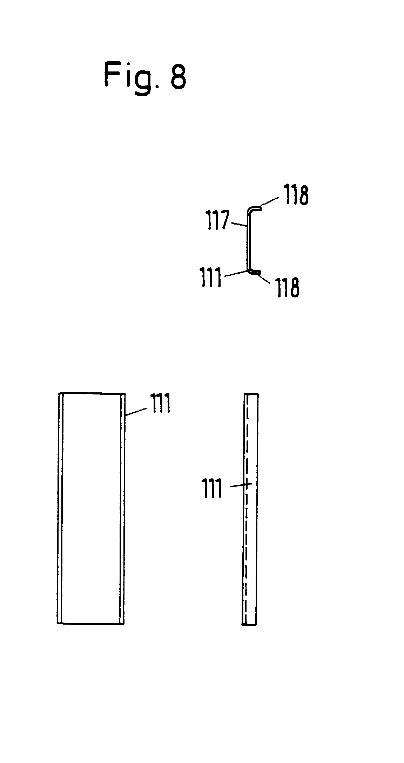

Das Verbindungsstück 111 ist in der Fig. 8 separat dargestellt. Es weist die Gestalt einer U-förmigen Schiene mit einem breiten Basisabschnitt 117 und relativ kurzen Endabschnitten 118 auf, die im wesentlichen im rechten Winkel zu dem Basisabschnitt 117 stehen.

Der in Fig. 5 in Strömungsrichtung dargestellte Katalysatormonolith umfaßt acht der in Fig. 7 abgebildeten Baugruppen. Dabei liegen die einzelnen Baugruppen derart gestapelt übereinander, daß die über die topfförmigen Bereiche 115 erhabenen Abschnitte der Anschlußelemente 110 von je zwei benachbarten Paketen aufeinanderliegen und sich dadurch eine mechanische Anpressung der topfförmigen Bereiche 115 an die Widerstandsheizschichten 21 ergeben kann. Dieses wird gefördert, wenn die Absenkung der topfförmigen Bereiche geringfügig größer ist als die Dicke der gewellten Folien 3 bzw. 3' und die Anschlußelemente auch aufgrund ihrer Materialstärke/-dicke - beispielsweise 0,2 mm - eine ausreichende Steifigkeit besitzen. Die einzelnen Folienpakete gemäß Fig. 7 werden zunächst ohne gegenseitige mechanische Verbindung übereinander gestapelt, wonach das Verbindungsstück 111 zwischen die Verbindungsklammern 116 eingeführt wird, wobei die freien Enden der Verbindungsklammer 116 auf die Endabschnitte 117, 118 (freien Schenkel) des U-förmigen Verbindungsstücks 111 zu liegen kommen. Sodann werden auch dort die aneinandergrenzenden metallischen Materialien beispielsweise durch Laserschweißen miteinander verschweißt. Derselbe Vorgang führt auf der gegenüberliegenden Seite ebenfalls zur mechanischen und elektrischen Verbindung der einzelnen Folienpakete. Es ergibt sich ein fester, weil stoffschlüssig verbundener Katalysatormonolith, dessen Widerstandsheizschichten 21 über die Verbindungsstücke 111 und die Anschlußelemente 110 und die Verbindungsklammern 116 elektrisch parallel geschaltet sind. Dabei können Vibrationen und insbesondere thermische Ausdehnungen über die Federwirkung der Verbindungsklammern 116 aufgefangen werden. Im Betrieb ist denkbar, daß die in Figur 5 eher mittig angeordneten Folienpakete durch den Abgasstrom des Kraftfahrzeuges stärker aufgeheizt werden als die äußeren Pakete, wobei sich eine thermische Ausdehnung vowiegend in der Querrichtung gemäß Figur 5 ergibt. Gerade diese thermische Ausdehnung kann von den einzelnen Verbindungsklammern 116 aufgenommen werden, die es ermöglichen, daß sich die einzelnen Folienpakete ohne Zerstörung gegeneinander bewegen können. Zum Erreichen einer gezielten Federwirkung der Verbindungsklammern wird bei diesem Ausführungsbeispiel deren Dicke mit etwa 0,1 mm halb so dick gewählt, wie die Materialstärke der Anschlußelemente 110 von etwa 0,2 mm. Bei einer Ausdehnung findet der Ausgleich dann hauptsächlich in den Verbindungsklammern statt.

Außer dem hier beschriebenen Aufbau mit Metallfolien 4, 4' bzw. 3, 3' aus hochlegierten Chrom-Aluminium-Stählen ist eine alternative Ausführungsform vorgesehen, die Folien aus einem Verbundmaterial aufweist. Dieses Verbundmaterial umfaßt eine Trägerfolie aus Chromstahl, die beidseitig mit Aluminium plattiert ist. Beim Erhitzen dieser Verbundfolie in kontrollierter Sauerstoffatmosphäre diffundiert das Aluminium in den Chromstahl hinein und bildet in dem Diffusionsbereich eine ausgesprochen korrosionsresistente Aluminium-ChromStahllegierung, während an der Außenseite der Aluminiumplattierung eine Aluminiumoxidschicht entsteht. Bei der Verwendung dieses Verbundmaterials kann auf die elektrische Isolationsschicht 20 verzichtet werden, da die Widerstandsheizschicht 21 unmittelbar auf das entstehende Aluminiumoxid gedruckt werden kann. Diese Ausführungsform ist hinsichtlich der Material- und Herstellungskosten des Katalysatormonolithen günstiger.

## Patentansprüche

1. Elektrisch beheizbarer Katalysator für die Reinigung von Abgas aus Verbrennungsprozessen, vorzugsweise von Verbrennungsmotoren, mit einem Gehäuse und einem in dem Gehäuse angeordneten Träger, vorzugsweise mit einer Vielzahl von zueinander parallel verlaufenden, von dem zu reinigenden Abgas durchströmbaren Kanälen, wobei der Träger wenigstens eine gegenüber dem Abgas katalytisch wirksame Schicht aufweist, wobei außerdem zumindest ein Teilbereich der Oberfläche des Trägers zumindest eine in Dickschichttechnik aufgetragene, elektrisch leitende Widerstandsheizschicht (21) mit elektrischen Anschlußbereichen (22) aufweist, die gegenüber dem Träger elektrisch isoliert ist, **dadurch gekennzeichnet,** daß Anschlußelemente (10, 110) für die elektrische Kontaktierung der Widerstandsheizschicht (21), vorzugsweise in den Anschlußbereichen, mit der Widerstandsheizschicht (21) stoffschlüssig und elektrisch leitend verbunden sind.

2. Vorrichtung nach Anspruch 1, **dadurch gekennzeichnet,** daß die Widerstandsheizschicht (21) im Siebdruckverfahren aufgetragen ist.

3. Vorrichtung nach einem der vorhergehenden Ansprüche, **dadurch gekennzeichnet,** daß die Anschlußelemente (10, 110) mit den Anschlußbereichen verschweißt sind.

4. Vorrichtung nach einem der vorhergehenden Ansprüche, **dadurch gekennzeichnet,** daß die Anschlußelemente (10, 110) mittels thermischer Schweißverfahren wie Widerstandspreßschweißen oder Laserschweißen oder mittels Ultraschallschweißen mit der Widerstandsheizschicht (21) verbunden sind.

5. Vorrichtung nach einem der vorhergehenden Ansprüche, **dadurch gekennzeichnet,** daß in den Anschlußbereichen auf die Widerstandsheizschicht (21) eine zusätzliche kontaktschicht (22) aufgebracht ist.

6. Vorrichtung nach einem der vorhergehenden Ansprüche, **dadurch gekennzeichnet,** daß die Anschlußelemente (10, 110) wenigstens in Querrichtung zur Abgasströmung federelastisch ausgebildet sind.

7. Vorrichtung nach einem der vorhergehenden Ansprüche, **dadurch gekennzeichnet,** daß jedem Anschlußbereich ein Anschlußelement (10) zugeordnet ist.

8. Vorrichtung nach einem der vorhergehenden Ansprüche, **dadurch gekennzeichnet,** daß je zwei Widerstandsheizschichten (20) an benachbarten Anschlußbereichen ein gemeinsames Anschlußelement (10, 110) zugeordnet ist.

9. Vorrichtung nach einem der vorhergehenden Ansprüche, **dadurch gekennzeichnet,** daß alle an einer Seite des Monolithen angeordneten Anschlußelemente (10, 110) mit einem gemeinsamen elektrisch leitenden Verbindungselement (11, 111) verbunden, insbesondere verschweißt sind.

10. Vorrichtung nach einem der vorhergehenden Ansprüche, **dadurch gekennzeichnet,** daß der Träger einen Stapel von ebenen (4, 4', 6,7) und gewellten (1,3,3', 5,5,) Metallfolien umfaßt.

11. Vorrichtung nach einem der vorhergehenden Ansprüche, **dadurch gekennzeichnet,** daß die Widerstandsheizschicht (21) auf wenigstens einer ebenen Metallfolie (4,4') angeordnet ist.

12. Vorrichtung nach einem der vorhergehenden Ansprüche, **dadurch gekennzeichnet,** daß die wenigstens eine ebene Metallfolie (4,4') zwei Widerstandsheizschichten (21) trägt.

## Claims

1. An electrically heatable catalyst for the cleaning of exhaust gas from combustion processes, preferably of internal combustion engines, with a housing and with a carrier arranged in the housing, preferably with a plurality of channels running parallel to each other, able to have the waste gas which is to be cleaned flowing through them, wherein the carrier has at least one layer which is catalytically effective with respect to the exhaust gas, wherein in addition at least a partial region of the surface of the carrier has at least one electrically conductive resistance heating layer (21) applied by thick layer technique, with electrical connection regions (22), which is electrically insulated with respect to the carrier, characterised in that the connection elements (10, 110) for the electrical contacting of the resistance heating layer (21), preferably in the connection regions, are connected with the resistance heating layer (21) so as to be of the same material and in an electrically conducting manner.

2. A device according to Claim 1, characterised in that the resistance heating layer (21) is applied by the screen printing process.

3. A device according to one of the preceding claims, characterised in that the connection elements (10, 110) are welded with the connection regions.

4. A device according to one of the preceding claims, characterised in that the connection elements (10, 110) are connected with the resistance heating layer (21) by means of thermal welding methods such as resistance pressure welding or laser welding or by means of ultrasonic welding.

5. A device according to one of the preceding claims, characterised in that in the connection regions an additional contact layer (22) is applied onto the resistance heating layer (21).

6. A device according to one of the preceding claims, characterised in that the connection elements (10, 110) are constructed so as to have spring elasticity at least in transverse direction to the flow of exhaust gas.

7. A device according to one of the preceding claims, characterised in that a connection element (10) is associated with each connection region.

8. A device according to one of the preceding claims, characterised in that a common connection element (10, 110) is associated with every two resistance heating layers (20) at adjacent connection regions.

9. A device according to one of the preceding claims, characterised in that all connection elements (10, 110) arranged on one side of the monolith are connected with a common electrically conducting connecting element (11, 111), in particular are welded.

10. A device according to one of the preceding claims, characterised in that the carrier comprises a stack of flat (4,4',6,7) and corrugated (1,3,3',5,5') metal foils.

11. A device according to one of the preceding claims, characterised in that the resistance heating layer (21) is arranged on at least one flat metal foil (4,4').

12. A device according to one of the preceding claims, characterised in that the at least one flat metal foil (4,4') carries two resistance heating layers (21).

## Revendications

1. Catalyseur susceptible d'être chauffé par voie électrique pour la purification de gaz d'échappement provenant de processus de combustion, de préférence de moteurs à combustion interne, comprenant un boîtier et un support agencé dans le boîtier ; de préférence avec une pluralité de canaux disposés parallèlement les uns aux autres et susceptibles d'être traversés par le courant des gaz d'échappement à purifier, le support comportant au moins une couche active sur le plan catalytique vis-à-vis des gaz d'échappement, et au moins une région partielle de la surface du support présentant en outre au moins une couche chauffante résistive (21) conductrice de l'électricité et appliquée suivant une technique en couche épaisse, avec des zones de raccordement électrique (22), ladite couche étant électriquement isolée vis-à-vis du support,
caractérisé en ce que les éléments de raccordement (10, 110) pour la mise en contact électrique de la couche chauffante résistive (21) sont reliés de par la matière et de façon électriquement conductrice à la couche chauffante résistive (21), de préférence dans les régions de raccordement.

2. Dispositif selon la revendication 1, caractérisé en ce que la couche chauffante résistive (21) est appliquée par sérigraphie.

3. Dispositif selon l'une des revendications précédentes, caractérisé en ce que les éléments de raccordement (10, 110) sont soudés avec les régions de raccordement.

4. Dispositif selon l'une des revendications précédentes, caractérisé en ce que les éléments de raccordement (10, 110) sont reliés à la couche chauffante résistive (21) au moyen d'un procédé de soudure thermique, comme la soudure résistive sous pression ou la soudure au laser, ou la soudure par ultrasons.

5. Dispositif selon l'une des revendications précédentes, caractérisé en ce qu'une couche de contact additionnelle (22) est appliquée sur la couche chauffante résistive (21) dans les régions de raccordement.

6. Dispositif selon l'une des revendications précédentes, caractérisé en ce que les éléments de raccordement (10, 110) sont réalisés avec l'élasticité d'un ressort, au moins en direction perpendiculaire vis-à-vis du courant de gaz d'échappement.

7. Dispositif selon l'une des revendications précédentes, caractérisé en ce qu'un élément de raccordement (10) est associé à chaque zone de raccordement.

8. Dispositif selon l'une des revendications précédentes, caractérisé en ce qu'un élément de raccordement commun (10, 110) est associé à deux couches chauffantes résistives respectives (20) au niveau de régions de raccordement voisines.

9. Dispositif selon l'une des revendications précédentes, caractérisé en ce que tous les éléments de raccordement (10, 110) agencés d'un côté du monolithe sont reliés, en particulier soudés, à un élément de liaison commun (11, 111) conducteur de l'électricité.

10. Dispositif selon l'une des revendications précédentes, caractérisé en ce que le support comprend un empilement de feuilles métalliques planes (4, 4', 6, 7) et de feuilles métalliques ondulées (1, 3, 3', 5, 5').

11. Dispositif selon l'une des revendications précédentes, caractérisé en ce que la couche chauffante résistive (21) est agencée sur au moins une feuille métallique plane (4, 4').

12. Dispositif selon l'une des revendications précédentes, caractérisé en ce que ladite au moins une feuille métallique plane (4, 4') porte deux couches chauffantes résistives (21).
